(19) Europäisches Patentamt
European Patent Office
Office européen des brevets

(11) **EP 2 848 795 A1**

(12) **EUROPEAN PATENT APPLICATION**
published in accordance with Art. 153(4) EPC

(43) Date of publication:
**18.03.2015 Bulletin 2015/12**

(51) Int Cl.:
***F02M 25/07*** *(2006.01)*

(21) Application number: **12876475.0**

(22) Date of filing: **09.05.2012**

(86) International application number:
**PCT/JP2012/061919**

(87) International publication number:
**WO 2013/168250 (14.11.2013 Gazette 2013/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **TOYOTA JIDOSHA KABUSHIKI KAISHA**
**Toyota-shi, Aichi-ken, 471-8571 (JP)**

(72) Inventor: **TANNO, Shiro**
**Toyota-shi, Aichi-ken, 471-8571 (JP)**

(74) Representative: **Smith, Samuel Leonard**
**J A Kemp**
**14 South Square**
**Gray's Inn**
**London WC1R 5JJ (GB)**

(54) **CONTROL DEVICE OF INTERNAL COMBUSTION ENGINE**

(57) A control device 100 of an internal combustion engine has a control unit that controls an amount of an intake-air, which is a gas before being taken into a combustion chamber 13 of an internal combustion engine 5, so that either when a specific component other than an oxygen is removed from the intake-air or when the specific component is added to the intake-air, a changing amount of an oxygen concentration in the intake-air caused by removal or addition of the specific component is reduced.

FIG. 1

**Description**

TECHNICAL FIELD

The present invention relates to a control device of an internal combustion engine.

BACKGROUND ART

Conventionally, there is known a technology in which an oxygen concentration in a combustion chamber of an internal combustion engine is controlled. For example, Patent Document 1 discloses an EGR (Exhaust Gas Recirculation) device to re-circulate a part of exhaust gas exhausted from the combustion chamber to the combustion chamber. With the EGR device, when the oxygen concentration in the combustion chamber is larger than a predetermined value, the oxygen concentration of the combustion chamber can be reduced by re-circulating a part of the exhaust gas exhausted from the combustion chamber to the combustion chamber.

PRIOR ART DOCUMENTS

PATENT DOCUMENTS

Patent Document 1: Japanese Patent Application Publication No. 2010-203282

SUMMARY OF THE INVENTION

PROBLEMS TO BE SOLVED BY THE INVENTION

It is thought that a component of gas before being taken into the combustion chamber of the internal combustion engine (hereinafter referred to as intake-air) changes before being taken into the combustion chamber. In concrete, for example, when condensed water occurs in the intake-air, moisture corresponding to the condensed water is removed from the intake-air and the intake-air is taken into the combustion chamber. In contrast, moisture may be added to the intake-air. In this case, the intake-air to which the moisture is added is taken into the combustion chamber.

In this manner, it is found that when the component of the intake-air changes because of removal of a specific component other than oxygen from the intake-air or added of the specific component, the oxygen concentration of the intake-air changes. A description will be given of this with use of a concrete example. For example, condensed water occurs in the intake-air. When moisture is removed from the intake-air as a result, the oxygen concentration of the intake-air increases according to an amount of the removed moisture. In contrast, it is found that when moisture is added to the intake-air, the oxygen concentration of the intake-air decreases according to an amount of the added moisture. In this manner, when the oxygen concentration of the intake-air changes, the oxygen concentration of the combustion chamber after the intake-air is taken into the combustion chamber may be shifted from an initially supposed range. In this case, exhaust emission may be degraded.

The present invention has an object to provide a control device of an internal combustion engine that is capable of suppressing degradation of exhaust emission in a case where a component of intake-air changed.

MEANS FOR SOLVING THE PROBLEMS

The control device of an internal combustion engine of the present invention has a control unit that controls an amount of an intake-air, which is a gas before being taken into a combustion chamber of an internal combustion engine, so that either when a specific component other than an oxygen is removed from the intake-air or when the specific component is added to the intake-air, a changing amount of an oxygen concentration in the intake-air caused by removal or addition of the specific component is reduced.

With the control device of the internal combustion engine of the present invention, the changing amount of the oxygen concentration of the intake-air caused by the removal or the adding of the specific component is reduced when the specific component is removed from the intake-air or the specific component is added to the intake-air. Therefore, the changing amount of the oxygen concentration of the combustion chamber after the intake-air is taken into the combustion chamber is reduced. It is therefore possible to suppress degradation of exhaust emission in a case where a component of the intake-air changes.

In the above-structure, the intake-air may include a fresh air and an EGR gas that passes through an EGR passage to re-circulate a part of an exhaust gas exhausted from the combustion chamber to the combustion chamber, and the control unit may control an amount of the fresh air or the EGR gas so that the changing amount of the oxygen concentration in the intake-air caused by the removal or the addition of the specific component is reduced either when the specific component is removed from the EGR gas or when the specific component is added to the EGR gas.

With the structure, it is possible to suppress the degradation of the exhaust emission in case where the specific component is removed from the EGR gas or the specific component is added to the EGR gas.

In the above structure, the control unit may increase the amount of the EGR gas compared to before the removal of the specific component or decrease the amount of the fresh air compared to before the removal of the specific component when the specific component is removed from the EGR gas, and the control unit may decrease the amount of the EGR gas compared to before the adding of the specific component or increase the amount of the fresh air compared to before the adding of the specific component when the specific component is added to the EGR gas.

With the structure, an increased amount of the oxygen concentration in the intake-air caused by the removal of the specific component from the EGR gas can be reduced. And, a decreased amount of the oxygen concentration of the intake-air caused by the adding of the specific component to the EGR gas can be reduced.

In the above structure, the specific component may be moisture. With the structure, the changing amount of the oxygen concentration of the intake air caused by the removal of the moisture from the intake-air or the changing amount of the oxygen concentration of the intake-air caused by the adding of the moisture to the intake-air can be reduced.

In the above structure, the internal combustion engine may be an internal combustion engine using a hydrogen as a fuel. When the internal combustion engine uses the hydrogen as the fuel, it is thought that a possibility that the moisture is removed from the intake-air may be higher than a case where the internal combustion engine uses a fuel other than the hydrogen such as a gasoline or light oil. Therefore, with the structure, it is possible to effectively suppress the degradation of the exhaust emission of the internal combustion engine that uses the hydrogen having a high possibility that the moisture is removed from the intake-air as the fuel.

EFFECTS OF THE INVENTION

According to the present invention, it is possible to provide a control device of an internal combustion engine that is capable of suppressing degradation of exhaust emission in a case where a component of intake-air changed.

BRIEF DESCRIPTION OF THE DRAWINGS

FIG. 1 illustrates a schematic view of an internal combustion engine;
FIG. 2A illustrates a schematic view of a component ratio of intake-air in a case where a specific component is not removed and a specific component is not added;
FIG. 2B illustrates a schematic view of a component ratio of intake-air in a case where a specific component is removed;
FIG. 2C illustrates a schematic view of a component ratio of intake-air in a case where a control for suppressing oxygen concentration change is performed in a case where moisture as a specific component is removed from EGR gas;
FIG. 3 illustrates a schematic view of a map example of reference values $R_0/\lambda_0$;
FIG. 4 illustrates a schematic view of a relation between an air excess ratio ($\lambda$) and a coefficient (k) of oxygen concentration change in a case where a target EGR ratio (R) is 50% in a sixth formula;
FIG. 5A illustrates a schematic view of a relation between concentrations of nitrogen, oxygen and moisture in exhaust gas and an equivalent ratio ($\Phi$);
FIG. 5B illustrates a schematic view of saturated vapor pressure curves; and
FIG. 6 illustrates an example of a flowchart executed during a control for suppressing oxygen concentration change by a control unit.

MODES FOR CARRYING OUT THE INVENTION

A description will be given of embodiments for carrying out the present invention.

[First Embodiment]

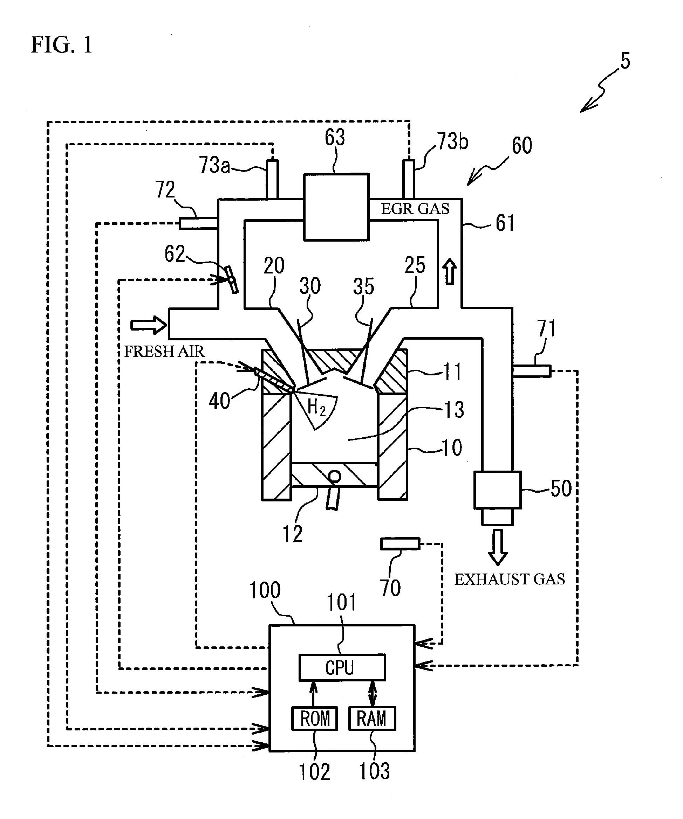

A description will be given of a control device 100 of an internal combustion engine (hereinafter referred to a control device 100) in accordance with a first embodiment. First, a description will be given of an overall structure of an internal combustion engine 5 to which the control device 100 is applied. Then, a description will be given of details of the control device 100. FIG. 1 illustrates a schematic view of the internal combustion engine 5. Various internal combustion engines such as an internal combustion engine using gasoline as fuel, an internal combustion engine using light oil as fuel, an internal combustion engine using hydrogen ($H_2$) as fuel may be used as the internal combustion engine 5. In the embodiment, an internal combustion engine using hydrogen as fuel is used as an example of the internal combustion engine 5. In concrete, an internal combustion engine of a direct-injection-in-cylinder type that directly injects hydrogen in a combustion chamber is used as the internal combustion engine 5.

As illustrated in FIG. 1, the internal combustion engine 5 has a cylinder block 10, a cylinder head 11, a piston 12, an intake-air passage 20, an exhaust passage 25, an intake-air valve 30, an exhaust gas valve 35, a fuel injection valve 40, an exhaust purifying catalyst 50, and an EGR (Exhaust Gas Recirculation) device 60, sensors, and the control device 100. The EGR device 60 has an EGR passage 61, an EGR valve 62 and an EGR cooler 63.

The cylinder head 11 is provided above the cylinder block 10. The piston 12 is provided in a cylinder formed in the cylinder block 10. A crank shaft (not illustrated) is connected to the piston 12. A combustion chamber 13 is formed in a region surrounded by the cylinder block 10, the cylinder head 11 and the piston 12.

The intake-air passage 20 is a passage through which intake-air before being taken into the combustion chamber 13 passes. In the embodiment, intake-gas flowing into an edge of the intake-air passage 20 that is opposite to the combustion chamber 13 is air. The air is referred to as fresh air. That is, the fresh air in the embodiment is air. The exhaust passage 25 is a passage through which the exhaust gas after burning in the combustion chamber 13 passes. The intake-air valve 30 is a valve opening or closing the edge of the intake-air passage 20 on the side of the combustion chamber 13. The exhaust gas valve 35 is a valve opening or closing the edge of the exhaust passage 25 on the side of the combustion chamber 13.

The fuel injection valve 40 is a valve to inject fuel. The fuel injection valve 40 of the embodiment is arranged in the internal combustion engine 5 so as to directly inject fuel into the combustion chamber 13. Hydrogen is supplied into the fuel injection valve 40 from a fuel supply apparatus as fuel. The exhaust purifying catalyst 50 is arranged in the exhaust passage 25. In concrete, the exhaust purifying catalyst 50 is arranged on the downstream side in the flowing direction of the exhaust gas with respect to the portion of the exhaust passage 25 to which the EGR passage 61 is connected. The exhaust purifying catalyst 50 is a catalyst to purify the exhaust gas passing through the exhaust passage 25. A type of the exhaust purifying catalyst 50 is not limited. However, in the embodiment, as an example, a three-way catalyst is used.

The EGR device 60 is a device to re-circulate a part of the exhaust gas exhausted from the combustion chamber 13 to the combustion chamber 13. The EGR passage 61 of the EGR device 60 is a passage to re-circulate a part of the exhaust gas exhausted from the combustion chamber 13 to the combustion chamber 13. The EGR passage 61 of the embodiment communicates an intermediate portion of the exhaust passage 25 with an intermediate portion of the intake-air passage 20. Hereinafter, the exhausted air passing through the EGR passage 61 is referred to as EGR gas. The EGR valve 62 is arranged in the EGR passage 61. The EGR valve 62 is a valve to adjust an amount of the EGR gas passing through the EGR passage 61.

When the EGR passage 61 is closed because of closing of the EGR valve 62, the EGR gas does not flow into the intake-air passage 20. When the EGR passage 61 is opened because of opening of the EGR valve 62, the EGR gas flows into the intake-air passage 20 and is mixed with the fresh air. After that, the EGR gas re-circulates into the combustion chamber 13. In this case, gas including the fresh air and the EGR gas is taken into the combustion chamber 13. That is, in the embodiment, the intake air taken into the combustion chamber 13 includes the fresh air and the EGR gas. The larger an opening angle of the EGR valve 62 is, the larger an opening angle of the EGR passage 61 is. As a result, an amount of the EGR gas passing through the EGR passage 61 per a unit time increases.

The EGR cooler 63 is arranged in the EGR passage 61. The EGR cooler 63 is a device to cool the EGR gas. A concrete structure of the EGR cooler 63 is not limited when the structure of the EGR cooler can cool the EGR gas. In the embodiment, an EGR cooler to cool the EGR gas with use of coolant is used as the EGR cooler 63. The position of the EGR cooler 63 in the EGR passage 61 is not limited. However, the EGR cooler 63 of the embodiment is arranged on the upstream side in the flowing direction of the EGR gas in the EGR passage 61 with respect to the EGR valve 62. Hereinafter, the EGR gas existing on the upstream side in the flowing direction of the EGR gas in the EGR passage with respect to the EGR cooler 63 may be referred to as entrance gas of EGR cooler. A pressure of the entrance gas of EGR cooler may be referred to as an entrance pressure of EGR cooler. The EGR gas existing on the downstream side in the flowing direction of the EGR gas in the EGR passage 61 with respect to the EGR cooler 63 may be referred to as exit gas of EGR cooler. A pressure of the exit gas of EGR cooler may be referred to as an exit pressure of EGR cooler.

The sensors are sensors to detect information needed for the control of the control device 100. In FIG. 1, a crank position sensor 70, an oxygen sensor 71, a temperature sensor 72, a pressure sensor 73a and a pressure sensor 73b are illustrated as an example of the sensors. The crank position sensor 70 detects a position of a crank shaft and transmits a detection result to the control device 100. The control device 100 obtains a crank angle of the internal combustion engine 5 based on the detection result of the crank position sensor 70. An index indicating an operation condition such as each stroke of the internal combustion engine 5 such as an inlet stroke or a compression stroke, a fuel injection timing, positions of the intake-air valve 30 and the exhaust gas valve 35 or a position of the piston 12 uses the crank angle as a reference unit. Therefore, the control device 100 can obtain the operation condition of the internal combustion engine 5 by obtaining the crank angle. The control device 100 of the embodiment obtains a rotation number (Ne) of the internal combustion engine 5 based on the detection result of the crank position sensor 70.

The oxygen sensor 71 detects an oxygen concentration in the exhaust gas passing through the exhaust passage 25 and gives a detection result to the control device 100. The control device 100 obtains an oxygen concentration in the exhaust gas based on the detection result of the oxygen sensor 71. A position of the oxygen sensor 71 in the exhaust passage 25 is not specifically limited, but, in the embodiment, is on the downstream side in the flowing direction of the exhaust gas with respect to a portion of the exhaust passage 25 to which the EGR passage 61 is connected and on the upstream side with respect to the exhaust purifying catalyst 50.

The control device 100 obtains an air excess ratio ($\lambda$) based on the detection result of the oxygen sensor 71. The air excess ratio is a value obtained by dividing an air amount during the intake stroke by a theoretical air amount needed for combustion of the fuel. A condition that the air excess ratio is 1 corresponds to a stoichiometric ratio. The air excess ratio has a correlation with the oxygen concentration in the exhaust gas. It is therefore possible to estimate the air excess ratio by obtaining the oxygen concentration in the exhaust gas. That is, the oxygen sensor 71 of the embodiment acts as a sensor to detect the air excess ratio. However, a method of obtaining the air excess ratio by the control device 100 is not limited to an obtaining method based on the detection result of the oxygen sensor 71. For example, the internal combustion engine 5 further may have a sensor (for example, an oxygen sensor) to detect an air excess ratio in the intake-air passage 20 and may obtain the air excess ratio based on a detection result of the sensor. Alternately, the control device 100 may obtain the air excess ratio by estimating the air excess ratio based on another index having a correlation with the air excess ratio.

The temperature sensor 72 is provided on the downstream side of the EGR passage 61 in the flowing direction of the EGR gas with respect to the EGR cooler 63. The temperature sensor 72 detects a temperature of the exit gas of the EGR cooler and gives a detection result to the control device 100. The control device 100 obtains the temperature of the exit gas of the EGR cooler based on the detection result of the temperature sensor 72. However, a method of obtaining the temperature of the exit gas of the EGR cooler by the control device 100 is not limited to an obtaining method based on the detection result of the temperature sensor 72. For example, the control device 100 may estimate the temperature of the exit gas of the EGR cooler based on an index having a correlation with the temperature of the exit gas of the EGR cooler (for example, a load of the internal combustion engine 5).

The pressure sensor 73a is provided on the downstream side of the EGR passage 61 in the flowing direction of the EGR gas with respect to the EGR cooler 63. The pressure sensor 73a detects an exit pressure of the EGR cooler and gives a detection result to the control device 100. The pressure sensor 73b is provided on the upstream side of the EGR passage 61 in the flowing direction of the EGR gas with respect to the EGR cooler 63. The pressure sensor 73b detects an entrance pressure of the EGR cooler and gives a detection result to the control device 100. The control device 100 obtains the exit pressure of the EGR cooler based on the detection result of the pressure sensor 73a and obtains the entrance pressure of the EGR cooler based on the detection result of the pressure sensor 73b.

However, the method of obtaining the exit pressure of the EGR cooler and the entrance pressure of the EGR cooler by the control device 100 is not limited to an obtaining method based on the detection result of the pressure sensor. For example, the control device 100 may obtain the exit pressure of the EGR cooler and the entrance pressure of the EGR cooler by estimating the exit pressure of the EGR cooler and the entrance pressure of the EGR cooler based on an index having a correlation with the exit pressure of the EGR cooler and the entrance pressure of the EGR cooler (for example, the load of the internal combustion engine 5). The internal combustion engine 5 has an air flow meter to detect an amount of the fresh air flowing into the intake-air passage 20 although the air flow meter is not illustrated in FIG. 1. The internal combustion engine 5 of the embodiment is mounted on a car. An accelerator position sensor to detect an opening angle of an accelerator (hereinafter referred to as an accelerator position) is provided in the car.

The control device 100 has a control unit to control the fuel injection valve 40 and the EGR valve 62 and a storage unit to store information needed for an operation of the control unit. An electronic control unit may be used as the control device 100. In the embodiment, an electronic control unit having a CPU (Central Processing Unit) 101, a ROM (Read Only Memory) 102 and a RAM (Random Access Memory) 103 is used as an example of the control device 100. A function of the control unit is realized by the CPU 101. A function of the storage unit is realized by the ROM 102 and the RAM 103.

The storage unit stores a map of a required amount of injected fuel corresponding to the load required for the internal combustion engine 5. In the map, the required amount of injected fuel having a relation with the accelerator position and is regulated. The control unit obtains the accelerator position based on a detection result of the accelerator position sensor, extracts the required amount of injected fuel corresponding to the accelerator position and controls the fuel injection valve 40 so that the fuel of the extracted required amount of injected fuel is injected.

The control unit controls the EGR ratio obtained by dividing the amount of the EGR gas by the intake-air amount sot that the EGR ratio becomes a predetermined target EGR ratio. A concrete obtaining method of the EGR ratio by the control unit is not limited. However, the control unit in the embodiment obtains the EGR ratio based on the detection result of air flow meter and the opening angle of the EGR valve 62. The EGR ratio may be obtained based on the amount of the fresh air and the amount of the EGR gas. The amount of the fresh air may be obtained based on the detection result of the air flow meter. The amount of the EGR gas may be obtained based on the opening angle of the EGR valve 62.

Further, the control unit performs a control for suppressing oxygen concentration change in which the amount of the intake-air is controlled so that the changing amount of the oxygen concentration during the intake stroke caused by removal or adding of a specific component that is a component other than oxygen is reduced when the specific component is removed from the intake-air or when the specific component is added to the intake-air.

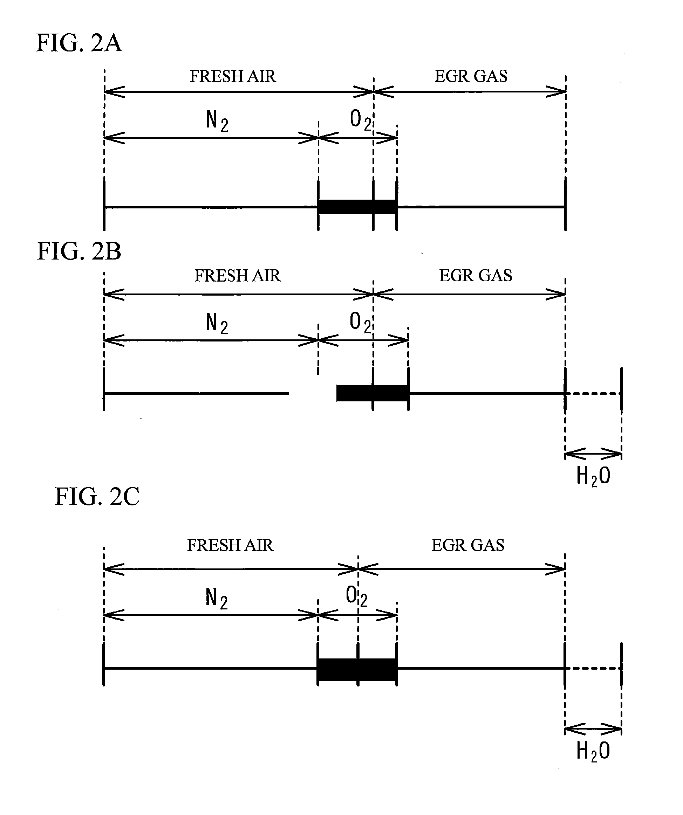

Next, a description will be given of details of the control device 100. In concrete, a description will be given of details of the control for suppressing oxygen concentration change performed by the control unit of the control device 100. First, a description will be given of details of changing of the oxygen concentration in the intake-air in a case where a specific component is removed from the intake-air or a case where a specific component is added to the intake-air, with reference to drawings. FIG. 2A and FIG. 2B illustrate a schematic view for describing the changing of the oxygen concentration in the intake-air caused by the removal or the adding of the specific component. In concrete, FIG. 2A schematically illustrates a component ratio of the intake-air in a case where the specific component is not removed and the specific component is not added. FIG. 2B schematically illustrates a component ratio in the intake-air in a case where the specific component is removed.

As illustrated in FIG. 2A and FIG. 2B, the intake-air of the embodiment includes the fresh air and the EGR gas. In FIG. 2A and FIG. 2B, a target EGR ratio is controlled to be a constant value. As a result, in FIG. 2A and FIG. 2B, ratios of the EGR gas in the intake-air are identical, and ratios of the fresh air in the intake-air are identical.

The fresh air includes nitrogen ($N_2$) and oxygen ($O_2$). The EGR gas also includes nitrogen and oxygen. A ratio of the nitrogen and the oxygen in the intake-air in a case where the specific component is not removed from the intake-air and the specific component is not added to the intake-air is a ratio as illustrated in FIG. 2A. When condensed water occurs in the intake-air because of condensation, moisture ($H_2O$) corresponding to the condensed water is removed from the intake-air. FIG. 2B illustrates a phase in which moisture as the specific component is removed from the intake-air. When FIG. 2A is compared with FIG. 2B, the oxygen concentration (illustrated by a thick line) in the intake-air is higher in FIG. 2B. This indicates that the ratio of the oxygen concentration in the whole intake-air increases according to the amount of the moisture removed from the intake-air, compared to the ratio before the moisture is removed from the intake-air.

As mentioned above, when the specific component is removed from the EGR gas, the oxygen concentration in the intake-air increases because of influence of the removal of the specific component. In contrast, when the specific component is added to the EGR gas, the oxygen concentration in the intake-air decreases because of influence of adding of the specific component. The same phenomena occurs not only in a case where the specific component is removed from the EGR gas or the specific component is added to the EGR gas but also in a case where the specific component is removed from the fresh air or the specific component is added to the fresh air. That is, when the specific component is removed from the intake-air or the specific component is added to the intake-air, the oxygen concentration in the intake-air changes because of the influence of the adding of the specific component.

In the embodiment, the changing of the oxygen concentration caused by the removal of the specific component does not mean that the oxygen concentration decreases because of consumption of the oxygen caused by the removal of the specific component. The changing of the oxygen concentration caused by the removal of the specific component in the embodiment means that although the oxygen is not consumed by the removal of the specific component, the oxygen concentration in the intake-air increases according to the removal of the specific component, compared to that before the removal of the specific component. In the embodiment, the changing of the oxygen concentration caused by the adding of the specific component does not mean that the oxygen concentration increases because of generation of the oxygen caused of the adding of the specific component. The changing of the oxygen concentration caused by the adding of the specific component in the embodiment means that although the oxygen is not generated by the adding of the specific component, the oxygen concentration in the intake-air decreases according to the adding of the specific component, compared to that before the adding of the specific component.

When the oxygen concentration in the intake-air changes as mentioned above, the oxygen concentration in the combustion chamber 13 after the intake-air is taken into the combustion chamber 13 may be shifted from an initially supposed range. In this case, the exhaust emission may be degraded. In concrete, when the oxygen concentration in the intake-air increases, the oxygen concentration in the combustion chamber 13 may increase. As a result, a flame temperature (combustion temperature) in the combustion chamber 13 may be higher than an initially supposed temperature. In this case, the NOx in the exhaust gas may be higher than a target value. As a result, the exhaust emission may be degraded. When the oxygen concentration in the intake-air decreases, the oxygen concentration in the combustion chamber 13 may decrease. As a result, the flame temperature in the combustion chamber 13 may be lower than the initially supposed temperature. In this case, for example, an amount of unburned fuel in the exhaust gas may increase. As a result, the exhaust emission may be degraded.

And so, in the control for suppressing oxygen concentration change, the control unit in the embodiment controls the amount of the intake-air so that the changing amount of the oxygen concentration in the intake-air caused by the removal or the adding of the specific component is reduced when the specific component is removed from the intake-air or the specific component is added to the intake-air. Thus, the changing amount of the oxygen concentration in the intake-air caused by the removal or the adding of the specific component can be reduced. Therefore, the changing amount of the oxygen concentration in the combustion chamber 13 can be reduced. As a result, it is possible to suppress the degradation of the exhaust emission in a case where the component in the intake-air changes.

In the embodiment, the internal combustion engine 5 has the EGR device 60, and the EGR device 60 has the EGR cooler 63. Therefore, the possibility that the moisture is removed from the EGR gas because of the passing of the EGR gas through the EGR cooler 63 is high, and the possibility that the moisture is added to the EGR gas is high. And so, a description will be given of the control for suppressing oxygen concentration change with use of the case where the specific component is removed from the EGR gas as an example of the case where the specific component is removed from the intake-air and with use of the case where the specific component is added to the EGR gas as an example of the case where the specific component is added to the intake-air.

In this case, the control unit controls the amount of the intake-air so that the changing amount of the oxygen concentration in the intake-air caused by the removal or the adding of the specific component when the specific component is removed from the EGR gas or the specific component is added to the EGR gas, in the control for suppressing oxygen concentration change. In the following description, moisture is used as the specific component unless if not otherwise specified.

The control unit may control the amount of the fresh air or may control the amount of the EGR gas when controlling the amount of the intake-air during the control for suppressing oxygen concentration change. That is, the control unit has only to control the amount of fresh air or the EGR gas so that the changing amount of the oxygen concentration in the intake-air caused by the removal or the adding of the specific component is reduced when the specific component is removed from the EGR gas or the specific component is added to the EGR gas, in the control for suppressing oxygen concentration change.

When the control unit controls the amount of the fresh air in the control for suppressing oxygen concentration change, the control unit, in concrete, controls the amount of the fresh air so that the amount of the fresh air decreases compared to before the removal of the specific component when the specific component is removed from the EGR gas. When the amount of the fresh air is controlled in this manner, the increased amount of the oxygen concentration in the intake-air caused by the removal of the specific component from the EGR gas can be reduced, and the decreased amount of the oxygen concentration in the intake-air caused by the adding of the specific component to the EGR gas can be reduced.

The control unit can increase or decrease the amount of the fresh air with used of the following method. First, the internal combustion engine 5 to which the control device 100 is applied has a throttle valve controlled by the control device 100 in the intake-air passage 20. An electronic throttle valve can be used as the throttle valve. This electronic throttle valve (hereinafter simply referred to as throttle valve if not otherwise specified) is provided on the upstream side of the intake-air passage 20 in the flowing direction of the intake-air with respect to the portion to which the EGR passage 61 is connected. The control unit can increase the amount of the fresh air by controlling an opening angle of the throttle valve to be a higher value. And, the control unit can decrease the amount of the fresh air by controlling the opening angle of the throttle valve to be a smaller value. In this manner, the control unit may increase or decrease the amount of the fresh air by controlling the opening angle of the throttle valve.

In the following description, the control unit does not control the amount of the fresh air but controls the amount of the EGR gas, in the control for suppressing oxygen concentration change. In concrete, the control unit controls the amount of the EGR gas so that the amount of the EGR gas increases compared to before the removal of the specific component as the control of the amount of the EGR gas when the specific component is removed from the EGR gas. And, the control unit controls the amount of the EGR gas so that the amount of the EGR gas decreases compared to before the adding of the specific component when the specific component is added to the EGR gas.

FIG. 2C illustrates a schematic view of the component ratio in the intake-air during the control for suppressing oxygen concentration change in which the amount of the EGR gas increases in a case where moisture as the specific component is removed from the EGR gas. As illustrated in FIG. 2C, the amount of the EGR gas increases when the control for suppressing oxygen concentration change is performed. As a result, the oxygen concentration in the intake-air is reduced compared to FIG. 2B.

From FIG. 2C, it is understood that the increased amount of the oxygen concentration in the intake-air caused by the removal of the specific component from the EGR gas can be reduced when the control unit increases the amount of the EGR gas in a case where the specific component is removed from the EGR gas. And, in contrast, it is understood that the decreased amount of the oxygen concentration in the intake-air can be reduced when the control unit performs a control for decreasing the amount of the EGR gas that is opposite to a case where the specific component is removed from the EGR gas, in case where the specific component is added to the EGR gas.

From FIG. 2C, it is understood that the increased amount of the oxygen concentration in the intake-air can be reduced when the amount of the fresh air is decreased instead of increasing the amount of the EGR gas in a case where the specific component is removed from the EGR gas. And, it is understood that the decreased amount of the oxygen concentration in the intake-air can be reduced when the control for increasing the amount of the fresh air that is opposite to the case where the specific component is removed from the EGR gas is performed in a case where the specific component is added to the EGR gas.

A concrete method for the control unit to increase or decrease the amount of the EGR gas is not specifically limited. For example, when the control unit controls the EGR ratio to be a predetermined target EGR ratio as in the case of the embodiment, the amount of the EGR gas can be increased or decreased by changing the target EGR ratio so that the target EGR ratio increases or decreases. When the control device 100 is controlling the EGR valve 62 so that the opening angle of the EGR valve 62 is a predetermined target opening angle, the amount of the EGR gas can be increased or decreased by increasing or decreasing the target opening angle. When the control device 100 is controlling the EGR valve 62 so that the amount of the EGR gas to be the predetermined target value, the amount of the EGR gas can be increased or decreased by increasing or decreasing the target amount.

In the embodiment, the control unit changes the amount of the EGR gas by changing the target EGR ratio when changing the amount of the EGR gas in the control for suppressing oxygen concentration change. Next, a description will be given of the changing control of the target EGR ratio by the control unit.

First, the following first formula is a formula regulating a relation between the oxygen concentration and the EGR ratio in the exhaust gas.

[First Formula]

$$[O_2]_{ex} = \frac{[O_2]_a \times \lambda L_0 + k[O_2]_{ex} \times \left[\dfrac{R}{1-R}\right] \times \lambda L_0 - [O_2]_a \times L_0}{\lambda L_0 + \left[\dfrac{R}{1-R}\right] \times \lambda L_0 - [O_2]_a \times L_0 + a}$$

In the first formula, $[O_2]_{ex}$ indicates the oxygen concentration in the exhaust gas. "R" indicates the EGR ratio. $[O_2]_a$ indicates the oxygen concentration in the fresh air. "λ" indicates the air excess ratio. "a" of a denominator of a right side of the first formula (a of +a) indicates the amount of carbon dioxide ($CO_2$) and moisture generated by the combustion of fuel per unit. "$L_0$" indicates a theoretical air amount needed for the combustion of the fuel per unit.

In the first formula, "k" is an index indicating a changing degree of the oxygen concentration in the intake-air in a case where the specific component is removed from the intake-air or the specific component is added to the intake-air. In the following description, the index is referred to as a coefficient of oxygen concentration change. The coefficient (k) of oxygen concentration change is larger than zero. The coefficient (k) of oxygen concentration change is set so that the coefficient (k) of oxygen concentration change is "1" when the specific component is not removed from the intake-air and the specific component is not added to the intake-air. The larger the amount of the specific component removed from the intake-air is (the larger the increased amount of the oxygen concentration in the intake-air caused by the removal of the specific component is), the larger than "1" the coefficient (k) of oxygen concentration change is. The larger the amount of the specific component added to the intake-air is (the larger the decreased amount of the oxygen concentration in the intake-air caused by the adding of the specific component to the intake-air is), the smaller than "1" the coefficient (k) of oxygen concentration change is. In the embodiment, the coefficient (k) of oxygen concentration change is calculated by a predetermined calculation formula. A concrete method of calculating the coefficient (k) of oxygen concentration change will be described later.

In the first formula, $[O_2]_a \times \lambda L_0$ of a numerator of the right side indicates the amount of oxygen in the fresh air. $K[O_2]_{ex} \times (R / (1-R)) \times \lambda L_0$ indicates the amount of oxygen in the EGR gas. $[O_2]_a \times L_0$ indicates the oxygen amount consumed by combustion. In the first formula, $\lambda L_0$ of the denominator of the right side indicates the amount of the fresh air. $(R / (1-R)) \times \lambda L_0$ indicates the amount of the EGR gas. $[O_2]_a \times L_0$ indicates the oxygen amount consumed by combustion.

When the first formula is deformed and ordered, the following second formula is obtained.

[Second Formula]

$$[O_2]_{ex} = \frac{[O_2]_a \times (\lambda - 1) L_0}{\left[\dfrac{\lambda (1-kR)}{1-R} - [O_2]_a\right] L_0 + a}$$

The oxygen concentration and the EGR ratio in the intake-air satisfy the following third formula.

[Third formula]

$$[O_2]_{in} = \frac{[O_2]_a \times V_a + kR \times [O_2]_{ex} \times V_{egr}}{V_a + V_{egr}}$$

In the third formula, $[O_2]_{in}$ indicates the oxygen concentration in the intake-air. $V_a$ indicates a volume of the fresh air flowing into the combustion chamber 13. $V_{egr}$ indicates a volume of the EGR gas flowing into the combustion chamber 13. Here, the EGR ratio R can be expressed as $V_{egr} / (V_a + V_{egr})$. Therefore, when the third formula is ordered with use of this expression and $[O_2]_{ex}$ of the second formula is substituted into $[O_2]_{ex}$ of the third formula and is ordered, the following fourth formula is obtained.

[Fourth Formula]

$$[O_2]_{in} = [O_2]_a \left[ 1 - R \left[ \frac{\dfrac{\lambda (1-k)+k(1-R)}{1-R} - [O_2]_a + a/L_0}{\dfrac{\lambda (1-kR)}{1-R} - [O_2]_a + a/L_0} \right] \right]$$

Here, as mentioned above, when the oxygen concentration in the intake-air increases because of the removal of the specific component from the intake-air, the coefficient (k) of oxygen concentration change is larger than "1". When the oxygen concentration in the intake-air decreases because of the adding of the specific component to the intake-air, the coefficient (k) of oxygen concentration change is smaller than "1". Even if the specific component is removed from the intake-air or the specific component is added to the intake-air in this manner, the shifting of the oxygen concentration from an initially supposed oxygen concentration range (hereinafter referred to as a target oxygen concentration range) can be suppressed because of the suppressing of the oxygen concentration change in the intake-air when the EGR ratio (R) is controlled so that a product between the "R" and a curly bracket of the right side of the fourth formula is a constant. When the shifting of the oxygen concentration in the intake-air from the target oxygen concentration range is suppressed, the degradation of the exhaust emission can be suppressed.
When the following fifth formula is satisfied, the product between the "R" and the curly bracket of the right side of the fourth formula becomes the constant.

[Fifth Formula]

$$R\left[\cfrac{\cfrac{\lambda(1-k)+k(1-R)}{1-R}-\left[O_2\right]_a+a/L_0}{\cfrac{\lambda(1-kR)}{1-R}-\left[O_2\right]_a+a/L_0}\right]=Const$$

"Const" of the fifth formula is a constant. When the fifth formula is approximated, the following sixth formula is obtained.

[Sixth Formula]

$$R\left[\cfrac{\lambda(1-k)+k(1-R)}{\lambda(1-kR)}\right]=Const$$

The control unit uses the EGR ratio (R) obtained by solving the quadratic equation of the sixth formula as the target EGR ratio. And, the control unit control the EGR ratio so that the EGR ratio becomes the target EGR ratio (R) calculated based on the sixth formula.

Next, a description will be given of a concrete method for calculating the target EGR ratio (R) from the quadratic equation of the sixth formula by the control unit. First, in advance, the storage unit of the control device 100 of the embodiment stores the value of the right side of the sixth formula under a condition that the internal combustion engine 5 achieves preferable combustion (hereinafter referred to as a reference value $R_0/\lambda_0$) related to the index indicating the operation condition of the internal combustion engine 5 under a condition that the specific component is not removed from the intake-air and the specific component is not added to the intake-air. In the embodiment, the load required for the internal combustion engine 5 and the rotation number of the internal combustion engine 5 are used as an example of the index indicating the operation condition of the internal combustion engine 5. The load required for the internal combustion engine 5 is not limited, but is a required amount of injected fuel in the embodiment.

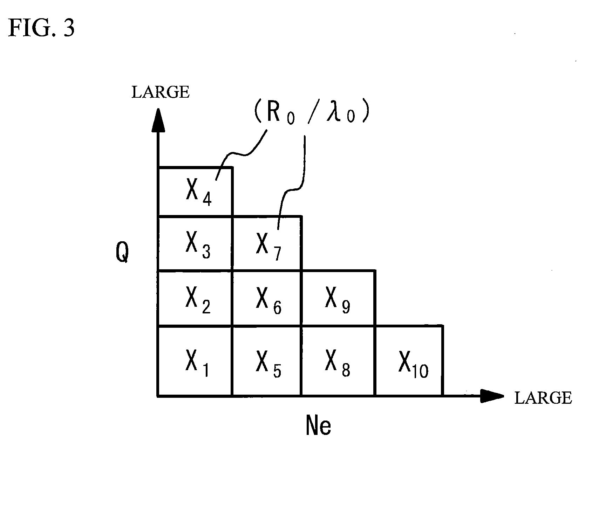

FIG. 3 illustrates a schematic view of a map example of the reference value $R_0/\lambda_0$. In FIG. 3, a plurality of reference values $R_0/\lambda_0$ are regulated by being related with the required amount of injected fuel (Q) and the rotation number (Ne) of the internal combustion engine 5. In concrete, in FIG. 3, a plurality of regions $X_1$ to $X_{10}$ are illustrated. Each region stores the reference value $R_0/\lambda_0$. The reference values $R_0/\lambda_0$ in the region having the same number are identical. However, the reference values $R_0/\lambda_0$ in different regions have a different value. A description will be given of an example of this. Reference values R0/λ0 having an identical value are stored in the region X1. The reference value $R_0/\lambda_0$ stored in the region $X_1$ is different from reference values $R_0/\lambda_0$ stored in the regions other than the region $X_1$ (regions $X_2$ to $X_{10}$).

The reference values $R_0/\lambda_0$ stored in the regions are values of R/λ in a case where the specific component is not removed from the intake-air and the specific component is not added to the intake-air. Further, the reference values $R_0/\lambda_0$ stored in the regions are values of R/λ in a case where the reference values $R_0/\lambda_0$ are substituted into the right side of the sixth formula, "R" obtained by solving the quadratic equation of the sixth formula is the target EGR ratio, and the combustion condition of the internal combustion engine 5 is preferable when the EGR ratio is controlled to be the target EGR ratio (R). The value of R/λ allowing the preferable combustion condition of the internal combustion engine 5 is a value of R/λ satisfying the condition that the oxygen concentration of the intake-air is within the target oxygen concentration range and the exhaust emission of the internal combustion engine 5 is equal to or less than a target value.

The map of FIG. 3 is a map in which the values of R/λ allowing the exhaust emission of the internal combustion engine 5 that is equal to or less than the target value is related to the operation condition of the internal combustion engine 5 under the condition that the specific component is not removed from the intake-air and the specific component is not added to the intake-air. The map of FIG. 3 may be obtained through experiments, simulations or the like in advance and may be stored in the storage unit. FIG. 3 simply illustrates an image of a map example for calculating the reference values $R_0/\lambda_0$. Therefore, the control unit does not always have to use the map divided into the regions having the shapes of FIG. 3. The reference values $R_0/\lambda_0$ are also not limited to the values of R/λ in the case where the specific component is not removed from the intake-air and the specific component is not added to the intake-air and may be values of R/λ in a case where the specific component is removed from the intake-air or the specific component is added to the intake-air.

The control unit obtains the required amount of injected fuel (Q) based on the accelerator position, obtains the rotation number (Ne) of the internal combustion engine 5 based on the detection result of the crank position sensor 70, obtains the reference value $R_0/\lambda_0$ by extracting the reference value $R_0/\lambda_0$ stored in a region corresponding to the obtained required amount of injected fuel and the obtained rotation number of the internal combustion engine 5 from the map of FIG. 3 and uses the obtained reference value as the right side (Const) of the sixth formula.

And, the control unit obtains the air excess ratio λ of the sixth formula based on the detection result of the oxygen sensor 71. The control unit calculates the coefficient (k) of oxygen concentration change based on the entrance pressure of the EGR cooler, the oxygen partial pressure of the entrance gas of the EGR cooler, the exit pressure of the EGR cooler and the oxygen partial pressure of the exit gas of the EGR cooler. In concrete, the control unit controls the coefficient (k) of oxygen concentration change based on the following seventh formula.

[Seventh Formula]

$$k = \frac{(PoutO_2 / Pout)}{(PinO_2 / Pin)}$$

In the seventh formula, "Pin" indicates the entrance pressure of the EGR cooler. "Pout" indicates the exit pressure of the EGR cooler. "$PinO_2$" indicates the oxygen partial pressure of the entrance gas of the EGR cooler. "$PoutO_2$" indicates the oxygen partial pressure of the exit gas of the EGR cooler. The seventh formula is a calculation equation in which a value obtained by dividing the ratio of the oxygen partial pressure ($PoutO_2$) of the exit gas of the EGR cooler in the exit pressure (Pout) of the EGR cooler by the ratio of the oxygen partial pressure ($PinO_2$) of the entrance gas of the EGR cooler in the entrance pressure (Pin) of the EGR cooler is used as the coefficient (k) of oxygen concentration change.

As mentioned above, the control unit of the embodiment obtains the exit pressure of the EGR cooler based on the detection result of the pressure sensor 73 a and obtains the entrance pressure of the EGR cooler based on the detection result of the pressure sensor 73b. The method of obtaining the oxygen partial pressure ($PinO_2$) of the entrance gas of the EGR cooler and the oxygen partial pressure ($PoutO_2$) of the exit gas of the EGR cooler will be described later.

From a viewpoint of the seventh formula, the coefficient (k) of oxygen concentration change calculated based on the seventh formula is "1" when the specific component is not removed from the EGR gas and the specific component is not added to the EGR gas in a case where the EGR gas passes through the EGR cooler 63. The coefficient (k) of oxygen concentration change calculated based on the seventh formula gets larger than "1" as the increased amount of the oxygen concentration of the exit gas of the EGR increases as a result of increasing of the specific component removed from the EGR gas in the case where the EGR gas passes through the EGR cooler 63. The coefficient (k) of oxygen concentration change calculated based on the seventh formula gets smaller than "1" as the decreased amount of the oxygen concentration of the exit gas of the EGR increases as a result of increasing of the specific component added to the EGR gas in the case where the EGR gas passes through the EGR cooler 63.

Therefore, the control unit can recognize whether the specific component is removed from the EGR gas or the specific component is added to the EGR gas based on the calculation result of the coefficient (k) of oxygen concentration change with use of the seventh formula.

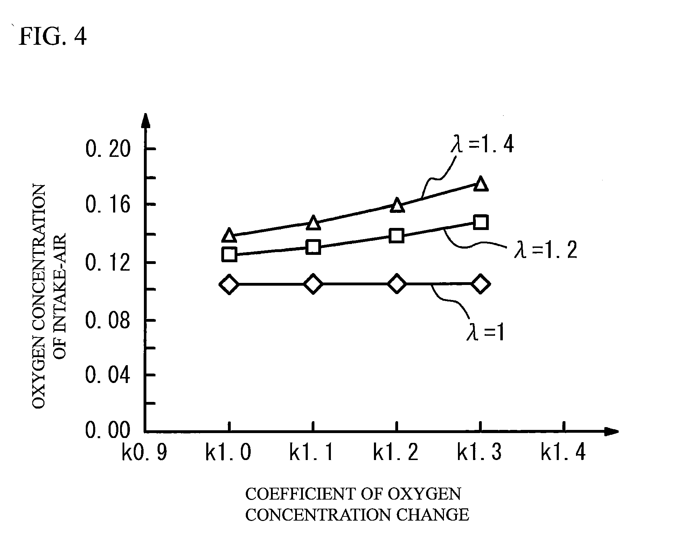

In order to facilitate the understanding of the relation between the air excess ratio (λ) and the coefficient (k) of oxygen concentration change, and the oxygen concentration in the intake-air used for the sixth formula, a description will be given of the relation with reference to a drawing. FIG. 4 illustrates a schematic view of the relation between the air excess ratio (λ) and the coefficient (k) of oxygen concentration change, and the oxygen concentration of the intake-air in a case where the target EGR ratio (R) is 50% in the sixth formula. A vertical axis indicates the oxygen concentration in the intake-air. A horizontal axis indicates the coefficient (k) of oxygen concentration change. FIG. 4 illustrates curves in which the air excess ratio ($\lambda$) is 1, 1.2 and 1.4. When the air excess ratio ($\lambda$) is "1", the oxygen concentration in the intake-air does not change even if the coefficient (k) of oxygen concentration change increases. The larger the coefficient (k) of oxygen concentration change is, the larger the oxygen concentration in the intake-air is, in the curves in which the air excess ratio ($\lambda$) is 1.2 and 1.4. From a viewpoint of FIG. 4, the oxygen concentration in the intake-air gets higher as the coefficient (k) of oxygen concentration change gets larger than 1 in a case where the air excess ratio ($\lambda$) is larger than "1".

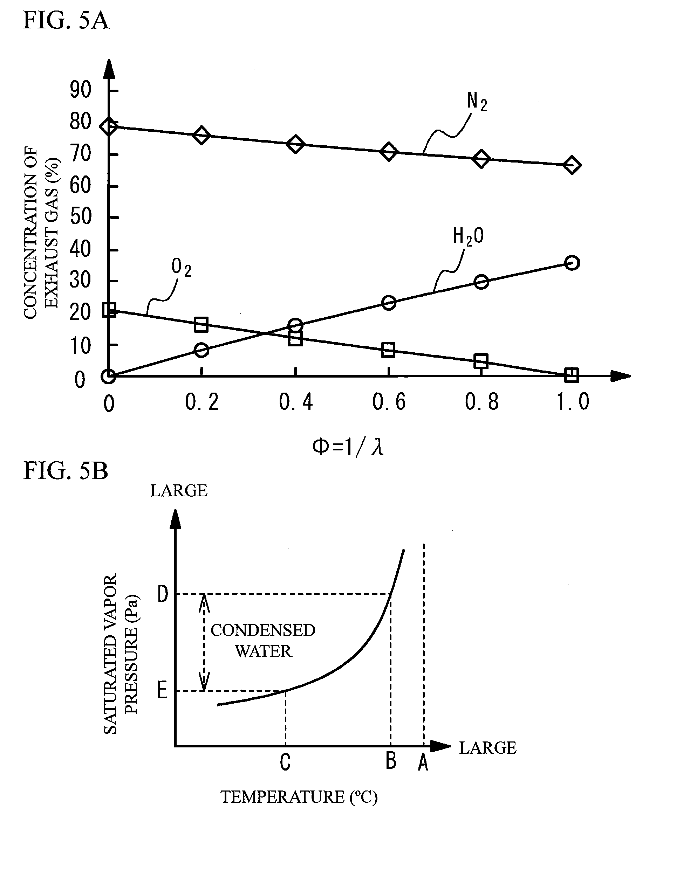

Next, a description will be given of a method of obtaining the oxygen partial pressure ($PinO_2$) of the entrance gas of the EGR cooler and the oxygen partial pressure ($PoutO_2$) of the exit gas of the EGR cooler used for the seventh formula. FIG. 5A and FIG. 5B illustrate a schematic view of the method of obtaining the oxygen partial pressure ($PinO_2$) of the entrance gas of the EGR cooler and the oxygen partial pressure ($PoutO_2$) of the exit gas of the EGR cooler. In concrete, FIG. 5A illustrates a schematic view of a relation between the concentrations of nitrogen, oxygen and moisture in the exhaust gas and an equivalent ratio ($\Phi$) that is an inverse number of the air excess ratio ($\lambda$). FIG. 5B illustrates a schematic view of a saturated vapor pressure curve. A vertical axis of FIG. 5B indicates the saturated vapor pressure. A horizontal axis indicates the temperature of the exhaust gas.

As illustrated in FIG. 5A, the oxygen concentration and the nitrogen concentration of the exhaust gas decreases as the equivalent ratio increases. The moisture concentration of the exhaust gas increases as the equivalent ratio increases. When the oxygen concentration and the nitrogen concentration of the exhaust gas are compared with each other under an identical equivalent ratio, the nitrogen concentration is higher than the oxygen concentration.

The storage unit stores a map indicating the relation between the concentrations of nitrogen, oxygen and moisture of the exhaust gas and the equivalent ratio ($\Phi$) illustrated in FIG. 5A in advance. The control unit obtains the air excess ratio ($\lambda$) based on the detection result of the oxygen sensor 71 and extracts the concentrations of nitrogen, oxygen and moisture corresponding to the obtained air excess ratio ($\lambda$) from the map stored in the storage unit. And, the control unit calculates the nitrogen partial pressure, the oxygen partial pressure and the moisture partial pressure of the entrance gas of the EGR cooler based on the concentrations of nitrogen, oxygen and moisture extracted from the map.

In concrete, the control unit obtains the entrance pressure (Pin) of the EGR cooer based on the detection result of the pressure sensor 73b and uses a product value between the nitrogen concentration ($CinN_2$) extracted from the map and the entrance pressure (Pin) of the EGR cooler as the nitrogen partial pressure ($PinN_2$) of the entrance gas of the EGR cooler. The control unit uses a product value between the oxygen concentration ($CinO_2$) extracted from the map and the entrance pressure (Pin) of the EGR cooler as the oxygen partial pressure ($PinO_2$) of the entrance gas of the EGR cooler. The control unit uses a product value between the moisture concentration ($CinH_2O$) extracted from the map and the entrance pressure (Pin) of the EGR cooler as the moisture partial pressure ($PinH_2O$) of the entrance gas of the EGR cooler. When the calculations are ordered in a formula, the following formulas are obtained.

$$PinN_2 = CinN_2 \text{ X Pin}$$

$$PinO_2 = CinO_2 \text{ X Pin}$$

$$PinH_2O = CinH_2O \text{ X Pin}$$

The control unit uses the oxygen partial pressure ($PinO_2$) of the entrance gas of the EGR cooler obtained by the above-mentioned method for the calculation of the coefficient (k) of oxygen concentration change based on the seventh formula.

And, the entrance pressure (Pin) of the EGR cooler can be expressed as a sum of the nitrogen partial pressure ($PinN_2$), the oxygen partial pressure ($PinO_2$) and the moisture partial pressure ($PinH_2$) of the entrance gas of the EGR cooler. When this is ordered as an equation, the following equation is obtained.

$$Pin = PinN_2 + PinO_2 + PinH_2O = (r+1) \text{ X } PinO_2 + PinH_2O$$

In the above formula, "r" indicates a ration of the nitrogen partial pressure ($PinN_2$) with respect to the oxygen partial pressure ($PinO_2$) (hereinafter referred to as nitrogen-oxygen partial pressure ratio). The control unit calculates the nitrogen-oxygen partial pressure ratio (r) based on the above formula and temporarily stores the calculated ratio in the storage unit.

Next, the control unit calculates the moisture partial pressure ($PoutH_2O$) of the exit gas of the EGR cooler. In the calculating, the storage unit stores the saturated vapor pressure curves illustrated in FIG. 5B in advance. Here, a description will be given of how to read the mal of FIG. 5B. In FIG. 5B, when the temperature of the exhaust gas (horizontal axis) is "A", there is no temperature of the exhaust gas corresponding to the saturated vapor pressure curves. Therefore, the condensed water caused by condensation is not generated. In contrast, when the EGR gas passes through the EGR cooler 63 and the temperature of the exhaust gas (that is, the temperature of the EGR gas) decreases from "B" to "C", the condensed water corresponding to the saturated vapor pressure D to the saturated vapor pressure E is generated. That is, in this case, the moisture acting as the specific component is removed from the EGR gas of the intake-air. In this manner, FIG. 5B can be read.

The control unit calculates the moisture partial pressure ($PoutH_2O$) of the exit gas of the EGR cooler from the map of the saturated vapor pressure curves that are stored in the storage unit and are illustrated in FIG. 5B. In concrete, the control unit obtains the saturated vapor pressure corresponding to the temperature do the exit gas of the EGR cooler obtained based on the detection result of the temperature sensor 72 as the moisture partial pressure ($PoutH_2O$) of the exit gas of the EGR cooler. As an example, when the temperature of the exit gas of the EGR cooler obtained based on the detection result of the temperature sensor 72 is the "C" of FIG. 5B, the control unit obtains the saturated vapor pressure "E" as the moisture partial pressure ($PoutH_2O$) of the exit gas of the EGR cooler.

Here, the exit pressure (Pout) of the EGR cooler can be expressed as a sum of the nitrogen partial pressure ($PoutN_2$), the oxygen partial pressure ($PoutO_2$) and the moisture partial pressure ($PoutH_2O$) of the exit gas of the EGR cooler. When this is expressed by a formula, the following is obtained.

$$Pout = PoutN_2 + PoutO_2 + PoutH_2O$$

It is thought that the partial pressure ratio between the nitrogen and oxygen of the EGR cooler does not change between the entrance and the exit of the EGR cooler 63 in a case where the EGR gas passes through the EGR cooler 63. Therefore, the nitrogen-oxygen partial pressure ratio (r) of the entrance gas of the EGR cooler calculated by the above-mentioned method can be used as the nitrogen-oxygen partial pressure ratio of the exit gas of the EGR cooler. As a result, the exit pressure (Pout) of the EGR cooler can be expressed as the following formula when the nitrogen-oxygen partial pressure ratio (r) of the entrance gas of the EGR cooler is used.

$$Pout = (r + 1) \times PoutO_2 + PoutH_2O$$

In the above formula, the exit pressure (Pout) of the EGR cooler can be obtained based on the detection result of the pressure sensor 73a. The moisture partial pressure ($PoutH_2O$) of the exit gas of the EGR cooler can be obtained based on the saturated vapor pressure curves of FIG. 5B. Therefore, the control unit can calculate the oxygen partial pressure ($PoutO_2$) of the exit gas of the EGR cooler based on the above formula. With the method, the control unit of the embodiment calculates the oxygen partial pressure ($PoutO_2$) of the exit gas of the EGR cooler and the oxygen partial pressure ($PinO_2$) of the entrance gas of the EGR cooler.

That is, the control unit of the embodiment calculates the oxygen partial pressure ($PinO_2$) of the entrance gas of the EGR cooler based on the air excess ratio $\lambda$ obtained based on the detection result of the oxygen sensor 71 and the entrance pressure (Pin) of the EGR cooler obtained based on the detection result of the pressure sensor 73b, calculates the nitrogen-oxygen partial pressure ratio r, calculates the moisture partial pressure ($PoutH_2O$) of the exit gas of the EGR gas based on the temperature of the exit gas of the EGR cooler obtained based on the detection result of the temperature sensor 72, and calculates the oxygen partial pressure ($PoutO_2$) of the exit gas of the EGR cooler based on the calculated nitrogen-oxygen partial pressure ratio r, the calculated moisture partial pressure ($PoutH_2O$) of the exit gas of the EGR cooler and the detection result of the pressure sensor 73 a.

The control unit calculates the coefficient (k) of oxygen concentration change based on the above-mentioned seventh formula, with use of the oxygen partial pressure ($PinO_2$) of the entrance gas of the EGR cooler and the oxygen partial pressure ($PoutO_2$) of the exit gas of the EGR cooler that are calculates in this manner, the entrance pressure (Pin) of the EGR cooler obtained based on the detection result of the pressure sensor 73b, and the exit pressure (Pout) of the EGR cooler obtained based on the detection result of the pressure sensor 73a.

And, the control unit calculates the target EGR ratio (R) based on the above-mentioned sixth formula, with use of the calculated coefficient (k) of oxygen concentration change, the reference value $R_0/\lambda_0$ calculated by the method described in FIG. 3 and the air excess ratio ($\lambda$) obtained based on the detection result of the oxygen sensor 71. And, the control unit performs the control for suppressing oxygen concentration change by controlling the EGR valve 62 so that an actual EGR ratio is the target EGR ratio (R).

Here, the target EGR ratio (R) calculated by the method is larger than the target EGR ratio (R) before the specific component is removed from the intake-air (that is, the coefficient k of oxygen concentration change = 1) in a case where the specific component is removed from the intake-air and the oxygen concentration of the intake-air increases (that is, the coefficient k of oxygen concentration change > 1), and is smaller than the target EGR ratio (R) of a case where the specific component is not added to the intake-air (that is, the coefficient k of oxygen concentration change = 1) in a case where the specific component is added to the intake-air and the oxygen concentration of the intake-air decreases (that is, the coefficient k of oxygen concentration change < 1).

Therefore, when the specific component is removed from the intake-air, the calculated target EGR ratio (R) is larger than the value before the specific component is removed. Therefore, when the EGR valve 62 is controlled so that the actual EGR ratio becomes the target EGR ratio (R), the amount of the taken EGR gas is larger than that before the specific component is removed, as a result. When the specific component is added to the intake-air, the calculated EGR ratio (R) is smaller than that before the specific component is added. Therefore, when the EGR valve 62 is controlled so that the actual EGR ratio becomes the target EGR ratio (R), the amount of the taken EGR gas is smaller than that before the specific component is added, as a result.

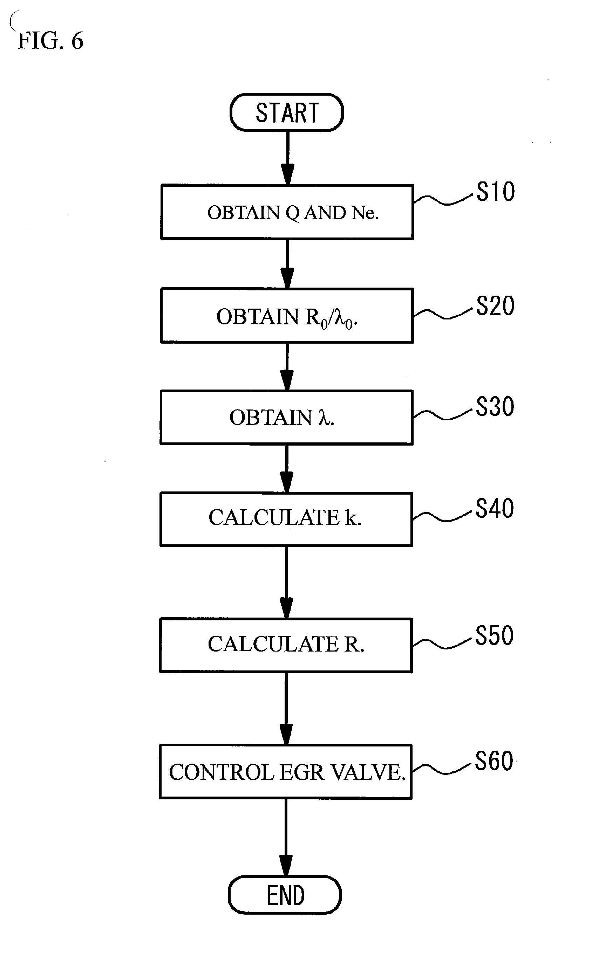

A description will be given of the control for suppressing oxygen concentration change by the control unit as a whole with use of a flowchart. FIG. 6 illustrates an example of the flowchart executed during the control for suppressing oxygen concentration change by the control unit. The control unit executes the flowchart at a given interval repeatedly. First, the control unit obtains the required amount of injected fuel (Q) and the rotation number (Ne) of the internal combustion engine 5 as an index indicating the operation condition of the internal combustion engine 5 (Step S10.)

Next, the control unit obtains the reference value $R_0/\lambda_0$ that is the right side of the sixth formula (Step S20). In concrete, the control unit extracts the reference value $R_0/\lambda_0$ corresponding to the required amount of injected fuel (Q) and the rotation number (Ne) of the internal combustion engine 5 from the map of FIG. 3, and temporarily stores the extracted reference value $R_0/\lambda_0$ in the storage unit. Next, the control unit obtains the air excess ratio ($\lambda$) based on the detection result of the oxygen sensor 71 and temporarily stores the air excess ratio ($\lambda$) in the storage unit (Step S30).

Next, the control unit calculates the coefficient (k) of oxygen concentration change (Step S40). In concrete, the control unit calculates the coefficient (k) of oxygen concentration change based on the seventh formula and temporarily stores the coefficient (k) of oxygen concentration change in the storage unit. Next, the control unit calculates the target EGR ratio (R) based on the sixth formula (Step S50). Next, the control unit controls the EGR valve 62 so that the EGR ratio is the target EGR ratio (R) (Step S60). Next, the control unit terminates the flowchart.

As mentioned above, the control device 100 performs the control for suppressing oxygen concentration change in which the amount of the intake-air is controlled so that the changing amount of the oxygen concentration in the intake-air caused by the removal or the adding of the specific component is reduced when the specific component is removed from the intake-air or the specific component is added to the intake-air. Therefore, it is possible to reduce the changing amount of the oxygen concentration in the intake-air caused by the removal or the adding of the specific component. In concrete, it is possible to reduce the changing amount of the oxygen concentration in the intake-air caused by the removal or the adding of the moisture when the specific component is the moisture as in the case of the embodiment. In this manner, the changing amount of the oxygen concentration in the intake-air caused by the removal or the adding of the specific component can be reduced. Therefore, it is possible to reduce the changing amount of the oxygen concentration in the combustion chamber 13. As a result, it is possible to suppress the degradation of the exhaust emission in a case where the component of the intake-air is changed.

In concrete, the internal combustion engine 5 to which the control device 100 of the embodiment is applied has the EGR device 60. Therefore, the intake-air includes the fresh air and the EGR gas. And, the control unit controls the amount of the fresh air or the EGR gas so that the changing amount of the oxygen concentration in the intake-air caused by the removal or the adding of the specific component is reduced in a case where the specific component is removed from the EGR gas or the specific component is added to the EGR gas in the control for suppressing oxygen concentration change. It is therefore possible to suppress the degradation of the exhaust emission in the case where the specific component is removed from the EGR gas or the specific component is added to the EGR gas.

In concrete, the control unit increases the amount of the EGR gas or decreases the amount of the fresh gas compared to before removal of the specific component in a case where the specific component is removed from the EGR gas in the control for suppressing oxygen concentration change. It is therefore possible to reduce the increased amount of the oxygen concentration in the intake-air caused by the removal of the specific component from the EGR gas. And, the control unit decreases the amount of the EGR gas or increases the amount of the fresh air compared to before the adding of the specific component in a case where the specific component is added to the EGR gas. It is therefore possible to reduce the decreased amount of the oxygen concentration in the intake-air caused by the adding of the specific component to the EGR gas.

That is, in the embodiment, when the amount of the EGR gas is controlled so that the changing amount of the oxygen concentration in the EGR gas caused by the removal or the adding of the specific component is reduced, the amount of the EGR gas in a case where the specific component is removed is more than the amount of the EGR gas in a case where the specific component is not removed in an identical engine operation condition. Alternately, the amount of the EGR gas is controlled so that the amount of the EGR gas in a case where the specific component is added is more than the amount of the EGR gas in a case where the specific component is not added.

And, the control unit calculates the target EGR ratio (R) based on the sixth formula when controlling the amount of the EGR gas in the control for suppressing oxygen concentration change and controls the amount of the EGR gas by controlling the EGR valve 62 so that the EGR ratio is the target EGR ratio (R). Thus, the shifting of the oxygen concentration in the intake-air from the target oxygen concentration range is suppressed even if the specific component is removed from the intake-air or the specific component is added to the intake-air. It is therefore possible to effectively suppress the degradation of the exhaust emission.

The type of the specific component is not limited to moisture when the specific component is other than oxygen. Carbon dioxide ($CO_2$) may be used as an example of the specific component other than the moisture. For example, the control device 100 of the embodiment can be applied to a technology in which the thermal efficiency of the internal combustion engine 5 is maintained and the NOx is reduced by removing the carbon dioxide of the EGR gas. As a result, NOx can be reduced more effectively.

The internal combustion engine 5 to which the control device 100 of the embodiment is applied is an internal combustion engine using hydrogen as fuel (hereinafter referred to as a hydrogen engine). As mentioned in FIG. 1, the type of the internal combustion engine 5 is not limited. An internal combustion engine other than the hydrogen engine such as an internal combustion engine using gasoline as fuel (hereinafter referred to as a gasoline engine) or an internal combustion engine using light oil as fuel (hereinafter referred to as a diesel engine).

Even if the internal combustion engine 5 to which the control device 100 is applied is other than the hydrogen engine, the possibility that the condensed moisture occurs in the intake-air passage 20 or the EGR passage 61 during a warm-up operation (that is, during cold) is high. As a result, the possibility that moisture as the specific component is removed from the intake-air is high. After the termination of the warm-up operation, when the condensed moisture occurring during the warm-up operation evaporates again and is mixed with the intake-air. Thereby, moisture may be added the intake-air. Even if the internal combustion engine 5 to which the control device 100 is applied is other than the hydrogen engine, the changing amount of the oxygen concentration caused by the removal or the adding of the specific component can be reduced. Therefore, the degradation of the exhaust emission in a case where the component of the intake-air is changed can be suppressed.

However, when the hydrogen engine is used as the internal combustion engine 5 to which the control device 100 is applied, there are advantages described below. First, in the hydrogen engine, the condensed water tends to occur compared to an engine other than the hydrogen engine. In particular, after the termination of the warm-up operation of the internal combustion engine 5, the condensed water tends to occur with respect to the hydrogen engine compared to the internal combustion engine other than the gasoline engine or the diesel engine. In the case of the gasoline engine or the diesel engine, moisture concentration in the exhaust gas is high because the condensed water tends to occur after the warm-up operation.

When the internal combustion engine 5 is the hydrogen engine, the condensed water tends to occur in the internal combustion engine 5, compared to an engine other than the hydrogen engine. It is therefore thought that the possibility that the moisture is removed from the intake-air is high. Therefore, there is an advantage that when the control device 100 is applied to the hydrogen engine as in the case of the embodiment, the degradation of the exhaust emission of the hydrogen engine having high possibility in which moisture is removed from the intake-air may be effectively suppressed.

The control device 100 of the embodiment controls the EGR valve 62 so that the EGR ratio is the target EGR ratio (R) calculated based on the sixth formula when performing the control for suppressing oxygen concentration change. However, the method of performing the control for suppressing oxygen concentration change is not limited. For example, the following example may be used as another example of the control for suppressing oxygen concentration change.

First, the internal combustion engine 5 has a sensor (moisture sensor) to detect that the moisture is removed from the intake-air and the moisture is added to the intake-air, in the intake-air passage 20 or the EGR passage 61. The control unit determines whether the moisture is removed from the intake-air based on the detection result of the sensor, and increases the amount of the EGR cooler or decreases the amount of the fresh air compared to before determination of removal when it is determined that the moisture is removed. And, the control unit determines whether the moisture is added to the intake-air based on the detection result of the sensor, and decreases the amount of the EGR gas or increases the amount of the fresh air compared to before determination of adding when it is determined that the moisture is added. In this manner, when the control for suppressing oxygen concentration change is performed, the changing amount of the oxygen concentration in the intake-air caused by the removal or the adding of the specific component is reduced. It is therefore possible to suppress the degradation of the exhaust emission.

The control device 100 of the embodiment can be applied to a case where the internal combustion engine 5 does not have the EGR device 60. In this case, the intake-air does not include the EGR gas but includes only the fresh air. In this case, the control for suppressing oxygen concentration change can be performed with use of the same method not using the above sixth formula. In concrete, the internal combustion engine 5 may have a sensor to detect the removal of the moisture from the intake-air and the adding of the moisture to the intake-air (for example, a moisture sensor) in the intake-air passage 20. The control unit may determine whether the moisture is removed from the intake-air based on a detection result of the sensor. And the control unit may decrease the amount of the fresh air compared to before the determination of the removal when it is determined that the moisture is removed. And, the control unit determines whether the moisture is added to the intake-air based on the detection result of the sensor. The control unit may increase the amount of the fresh air compared to before the determination of the adding when it is determined that the moisture is added. In this case, the changing amount of the oxygen concentration of the intake-air caused by the removal or the adding of the specific component. It is therefore possible to suppress the degradation of the exhaust emission.

The preferable embodiments of the present invention are described. However, the present invention is not limited to the specifically disclosed embodiments and variations but may include other embodiments and variations without departing from the scope of the present invention.

DESCRIPTION OF LETTERS OR NUMERALS

| | |
|---|---|
| Internal combustion engine | 5 |
| Combustion chamber | 13 |
| Intake-air passage | 20 |
| Exhaust passage | 25 |
| Fuel injection valve | 40 |
| EGR device | 60 |
| EGR passage | 61 |
| EGR valve | 62 |
| EGR cooler | 63 |
| Crank position sensor | 70 |
| Oxygen sensor | 71 |
| Temperature sensor | 72 |
| Pressure sensor | 73a, 73b |
| Control device | 100 |

Claims

1.   A control device of an internal combustion engine comprising
a control unit that controls an amount of an intake-air, which is a gas before being taken into a combustion chamber of an internal combustion engine, so that either when a specific component other than an oxygen is removed from the intake-air or when the specific component is added to the intake-air, a changing amount of an oxygen concentration in the intake-air caused by removal or addition of the specific component is reduced.

2.   The control device of the internal combustion engine as claimed in claim 1, wherein:

the intake-air includes a fresh air and an EGR gas that passes through an EGR passage to re-circulate a part of an exhaust gas exhausted from the combustion chamber to the combustion chamber; and
the control unit controls an amount of the fresh air or the EGR gas so that the changing amount of the oxygen concentration in the intake-air caused by the removal or the addition of the specific component is reduced either when the specific component is removed from the EGR gas or when the specific component is added to the EGR gas.

3.   The control device of the internal combustion engine as claimed in claim 2, wherein:

the control unit increases the amount of the EGR gas compared to before the removal of the specific component or decreases the amount of the fresh air compared to before the removal of the specific component when the specific component is removed from the EGR gas; and

the control unit decreases the amount of the EGR gas compared to before the adding of the specific component or increases the amount of the fresh air compared to before the adding of the specific component when the specific component is added to the EGR gas.

4. The control device of the internal combustion engine as claimed in any of claims 1 to 3, wherein the specific component is moisture.

5. The control device of the internal combustion engine as claimed in any of claims 1 to 4, wherein the internal combustion engine is an internal combustion engine using a hydrogen as a fuel.

FIG. 1

**FIG. 2A**

**FIG. 2B**

**FIG. 2C**

FIG. 3

FIG. 4

FIG. 5A

FIG. 5B

FIG. 6

```
        ( START )
            │
            ▼
┌──────────────────────┐
│   OBTAIN Q AND Ne.   │ ──── S10
└──────────────────────┘
            │
            ▼
┌──────────────────────┐
│   OBTAIN $R_0/\lambda_0$.   │ ──── S20
└──────────────────────┘
            │
            ▼
┌──────────────────────┐
│     OBTAIN $\lambda$.      │ ──── S30
└──────────────────────┘
            │
            ▼
┌──────────────────────┐
│    CALCULATE k.      │ ──── S40
└──────────────────────┘
            │
            ▼
┌──────────────────────┐
│    CALCULATE R.      │ ──── S50
└──────────────────────┘
            │
            ▼
┌──────────────────────┐
│  CONTROL EGR VALVE.  │ ──── S60
└──────────────────────┘
            │
            ▼
        (  END  )
```

**EP 2 848 795 A1**

## INTERNATIONAL SEARCH REPORT

| | International application No. |
|---|---|
| | PCT/JP2012/061919 |

**A. CLASSIFICATION OF SUBJECT MATTER**
*F02M25/07*(2006.01)i

According to International Patent Classification (IPC) or to both national classification and IPC

**B. FIELDS SEARCHED**

Minimum documentation searched (classification system followed by classification symbols)
F02M25/07, F02D41/00-41/18

Documentation searched other than minimum documentation to the extent that such documents are included in the fields searched
Jitsuyo Shinan Koho 1922-1996 Jitsuyo Shinan Toroku Koho 1996-2012
Kokai Jitsuyo Shinan Koho 1971-2012 Toroku Jitsuyo Shinan Koho 1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 9-133052 A (Tokyo Gas Co., Ltd.), 20 May 1997 (20.05.1997), paragraphs [0016] to [0030]; fig. 1 (Family: none) | 1-5 |
| A | JP 2009-235909 A (Toyota Motor Corp.), 15 October 2009 (15.10.2009), entire text; all drawings (Family: none) | 1-5 |
| A | JP 2007-51587 A (Mazda Motor Corp.), 01 March 2007 (01.03.2007), entire text; all drawings & US 2007/0039598 A1 & EP 1754874 A1 | 1-5 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>18 June, 2012 (18.06.12) | Date of mailing of the international search report<br>24 July, 2012 (24.07.12) |
|---|---|
| Name and mailing address of the ISA/<br>Japanese Patent Office | Authorized officer |
| Facsimile No. | Telephone No. |

Form PCT/ISA/210 (second sheet) (July 2009)

24

**INTERNATIONAL SEARCH REPORT**

| International application No. |
|---|
| PCT/JP2012/061919 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2010-203282 A  (Mazda Motor Corp.),<br>16 September 2010 (16.09.2010),<br>entire text; all drawings<br>(Family: none) | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010203282 A